# EUROPÄISCHE PATENTSCHRIFT

(11) **EP 0 283 664 B1**
(45) Veröffentlichungstag und Bekanntmachung des Hinweises auf die Patenterteilung: **13.01.1993**
(21) Anmeldenummer: 88101126.6
(22) Anmeldetag: 27.01.1988
(51) Int. Cl.: F16H 27/04

(54) **Schrittgetriebe**
Step-by-step transmission
Mécanisme pas à pas

(30) Priorität: 20.03.1987 CH 1074/87
(43) Veröffentlichungstag der Anmeldung: 28.09.1988
(73) Patentinhaber: ELPATRONIC AG, CH-6300 Zug (CH)
(72) Erfinder: Becker, Anton, D-5100 Aachen (DE); Kramer, Felix, CH-8964 Friedlisberg (CH)

(56) Entgegenhaltungen:
- EP-A- 0 162 816
- WO-A-88/02079
- AT-B- 367 188
- DE-B- 1 750 852
- KATALOG, Nr. 2, 1987, 5. Auflage FERGUSON MACHINE COMPANY S.A.,BrUssel, Belgien

## Beschreibung

Die Erfindung betrifft ein Schrittgetriebe mit
- einem ersten Drehkörper, der von einer treibenden Welle antreibbar ist,
- einem zweiten Drehkörper, von dem eine getriebene Welle antreibbar ist, und
- einer Eingriffsbeziehung zwischen den beiden Drehkörpern, durch welche eine kontinuierliche Drehung des ersten Drehkörpers in eine intermittierende Drehung des zweiten Drehkörpers umsetzbar ist.

Solche intermittierenden Drehungen sind - entweder als schrittweise in einer bestimmten Drehrichtung voranschreitende Drehungen oder als hin- und hergehende Drehungen - für zahlreiche Bearbeitungs- und Fördervorgänge erforderlich. Beispielsweise kann ein Getriebe der genannten Gattung einen Förderer antreiben, der gerundete Dosenzargen zwischen Elektrodenrollen hindurchbewegt, von denen Längsränder der Dosenzargen miteinander verschweisst werden.

Damit der Förderer bei jedem Arbeitszyklus eine gerundete Dosenzarge von einer ihm vorgeschalteten Rundvorrichtung sicher übernehmen kann, muss der Förderer periodisch verlangsamt oder ganz stillgesetzt werden. Andererseits soll der Förderer aber jede einzelne Dosenzarge mit möglichst konstanter Geschwindigkeit zwischen den Elektrodenrollen hindurchbewegen, damit eine gleichmässige Schweissnaht entsteht.

Bei derartigen Förderbewegungen, die von einem Schrittgetriebe abgeleitet werden, müssen träge Massen von unter Umständen erheblicher Grösse periodisch beschleunigt und verzögert werden. Das Schrittgetriebe muss deshalb imstande sein, entsprechend grosse Drehmomente in wechselnden Richtungen zusätzlich zu einem der eigentlichen Förderaufgabe entsprechenden Nutzdrehmoment abzugeben. Hinzu kommen meist noch Drehmomente zum Ausgleich von Reibungsverlusten und dergleichen.

Bei einem bekannten Schrittgetriebe der eingangs beschriebenen Gattung (Katalog Nr. 7/82 der Ferguson Machine Company S.A., Brüssel, Belgien) sind die treibende und die getriebene Welle im rechten Winkel zueinander in einem Getriebegehäuse gelagert. Der erste Drehkörper hat eine wendelförmige Rippe, die sich über etwas mehr als eine Umdrehung erstreckt und einen Anfangsbereich, einen Mittelbereich und einen Endbereich ohne Steigung sowie Zwischenbereiche mit beispielsweise sinusförmig zu- und dann wieder abnehmender Steigung aufweist. Dieser erste Drehkörper ist an der treibenden Welle starr befestigt. Der zweite Drehkörper ist an der getriebenen Welle starr befestigt und hat sternförmig angeordnete radiale Zapfen, auf denen je eine Rolle gelagert ist.

Die wendelförmige Rippe bewegt sich bei jeder Umdrehung des ersten Drehkörpers zwischen zwei Rollen am zweiten Drehkörper hindurch und berührt mit ihren Anfangs- und Endbereichen zeitweise eine dritte Rolle, so dass zwischen den beiden Drehkörpern stets Zwangseingriff besteht. Dadurch ist der zweite Drehkörper gezwungen, sich bei jeder vollen Umdrehung des ersten Drehkörpers um einen Winkel zu drehen, der dem Abstand zwischen je zwei benachbarten Rollen entspricht.

Es sind auch Schrittgetriebe der genannten Gattung mit parallelen Achsen bekannt, beispielsweise Maltesergetriebe.

Wenn ein bekanntes Schrittgetriebe oder eine ihm nachgeschaltete Vorrichtung vor überlastung geschützt werden soll, kann zwischen der getriebenen Welle des Schrittgetriebes und der nachgeschalteten Vorrichtung eine überlastkupplung angeordnet werden. Hierzu eignen sich beispielsweise bekannte Rutschkupplungen. Das übertragbare Drehmoment einer solchen Kupplung muss derart einstellbar sein, dass die Kupplung imstande ist, die Summe aller im Betrieb normalerweise vorkommenden Momente zu übertragen, nämlich Beschleunigungs- oder Verzögerungsmomente, Reibungsmomente und Nutzmomente. Diese Momentensumme kann im Verhältnis zu einem Störmoment, das infolge einer Betriebsstörung an der nachgeschalteten Vorrichtung auftreten kann, sehr gross sein. Schon deshalb ist es schwierig, eine bekannte Kupplung, die zwischen einem bekannten Schrittgetriebe der genannten Gattung und einer nachgeschalteten Vorrichtung angeordnet sein könnte, derart einzustellen, dass sie auf ein Störmoment überhaupt reagiert.

Hinzu kommt, dass eine Störung an einer nachgeschalteten Vorrichtung in einer Betriebsphase auftreten kann, in der bedeutende träge Massen mit gleichförmiger Geschwindigkeit bewegt werden, so dass Beschleunigungsmomente nicht auftreten. Bei einer solchen Störung kann die Summe aus dem Störmoment und gegebenenfalls zusätzlich auftretenden Nutz- und Reibungsmomenten erheblich kleiner sein als das grösste in anderen Betriebsphasen auftretende Beschleunigungsmoment. Daher besteht die Gefahr, dass eine überlastkupplung bekannter Art auf ein Störmoment nicht reagiert, ehe die Störung an der nachgeschalteten Vorrichtung ein Ausmass angenommen hat, bei dem das Störmoment grösser ist als die grösste im normalen Betrieb vorkommende Summe aus Beschleunigungs-, Nutz- und Reibungsmomenten. Dadurch können bekannte gattungsgemässe Schrittgetriebe und/oder nachgeschaltete Vorrichtungen beschädigt werden.

In der PCT-Anmeldung WO-A-88/02079 (Dokument gemäss Art. 54(3) EPÜ für einen Teil der benannten Vertragsstaaten) ist ein Schrittgetriebe beschrieben, das ausser den eingangs erwähnten Merkmalen noch die nachstehenden Merkmale aufweist:
- einer der beiden Drehkörper ist mit der zugehörigen Welle durch eine Kupplung verbunden,
- der Kupplung ist ein Halteglied zugeordnet, das auf sie eine im Einrücksinne wirkende Haltekraft ausübt, und
- einer der Wellen ist eine Steuervorrichtung zugeordnet, die abhängig von der Drehwinkelstellung dieser Welle die Haltekraft steuert.

Der Erfindung liegt deshalb die Aufgabe zugrunde, ein Schrittgetriebe derart weiterzubilden, dass es imstande ist, rechtzeitig auf Störmomente zu reagieren, unabhängig davon, in welcher Phase eines Betriebszyklus eine Störung auftritt.

Die Aufgabe ist erfindungsgemäss bei einem Schrittgetriebe der eingangs beschriebenen Gattung dadurch gelöst, dass
- einer der beiden Drehkörper mit der zugehörigen Welle durch eine Kupplung verbunden ist,
- der Kupplung ein Halteglied zugeordnet ist, das auf sie eine im Einrücksinne wirkende Haltekraft ausübt, und
- einer der Wellen eine Steuervorrichtung zugeordnet ist, die abhängig von der Drehwinkelstellung dieser Welle die Haltekraft steuert.

Die erfindungsgemässe Steuerung lässt sich in ihrer Gestaltung und Anordnung dem jeweiligen Anwendungszweck des Schrittgetriebes derart anpassen, dass die Kupplung in jeder Betriebsphase ein Drehmoment überträgt, das gerade so gross ist wie die Summe aus den Beschleunigungs-, Nutz- und Reibungsmomenten, die in der betreffenden Betriebsphase bei ungestörtem Betrieb auftreten. Wird diese Summe um ein Störmoment überschritten, so lässt die Kupplung eine Relativdrehung des betreffenden Drehkörpers in bezug auf die zugehörige Welle zu, auch wenn das Störmoment im Verhältnis zur genannten Momentensumme klein ist. Eine nachgeschaltete Vorrichtung sowie das erfindungsgemässe Schrittgetriebe selbst lassen sich somit wirksam schützen.

Bei einer zweckmässigen Ausgestaltung der Erfindung weist die Steuervorrichtung mindestens eine Kurve auf, die mit einer der beiden Wellen umläuft und über ein Kurvenfolgeglied auf eine Feder einwirkt, die das Halteglied belastet.

Dabei ist es vorteilhaft, wenn zwischen dem Kurvenfolgeglied und dem Halteglied ein Wegumsetzer mit einstellbarem übersetzungsverhältnis angeordnet ist.

Der Wegumsetzer kann beispielsweise zwei Hebel aufweisen, die durch ein längs der beiden Hebel einstellbares Gelenk miteinander verbunden sind.

Die Steuervorrichtung ist vorzugsweise der treibenden Welle zugeordnet. Dies hat den Vorteil, dass die Steuervorrichtung das von der Kupplung übertragbare Drehmoment auch in solchen Betriebsphasen verändern kann, in denen der zweite Drehkörper und somit auch die getriebene Welle stillsteht.

Es ist ferner vorteilhaft, wenn die Kupplung zwischen dem zweiten Drehkörper und der getriebenen Welle angeordnet ist. Grundsätzlich kann die Kupplung ihre Schutzfunktion aber auch dann erfüllen, wenn sie zwischen dem ersten Drehkörper und der treibenden Welle angeordnet ist.

Vorzugsweise ist die Kupplung innerhalb eines Getriebegehäuses zwischen zwei Lagern der getriebenen Welle angeordnet. Diese Lager müssen im allgemeinen ohnehin so ausgelegt sein, dass sie erhebliche Axialkräfte übertragen können; es ist dann nicht erforderlich, für die Kupplung zusätzliche Lager vorzusehen, die Axialkräfte in das Gehäuse ableiten.

Die Kupplung kann in geeigneten Fällen eine Rutschkupplung bekannter Bauart sein. Besonders zweckmässig ist es jedoch, wenn die Kupplung eine Schaltkupplung ist, die eine vom Drehmoment an der betreffenden Welle abhängige Ausdrückkraft erzeugt und bei überschreitung eines durch die Haltekraft bestimmten Drehmoments vollständig ausrückt. Auch solche Schaltkupplungen sind an sich bekannt.

Schliesslich ist es vorteilhaft, wenn der Kupplung zusätzlich eine von Hand betätigbare Ausrückvorrichtung zugeordnet ist.

Ein Ausführungsbeispiel der Erfindung wird im folgenden anhand schematischer Zeichnungen mit weiteren Einzelheiten erläutert. Es zeigt:

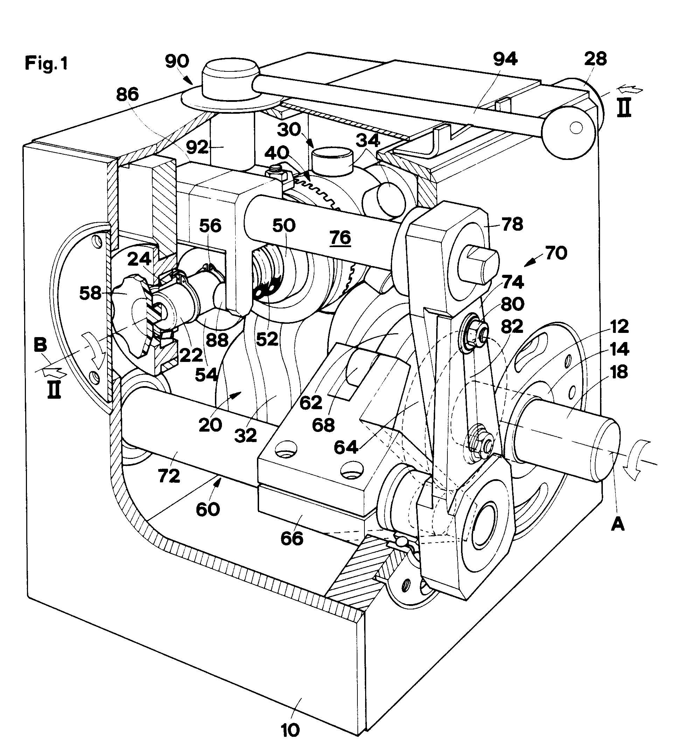

- Fig. 1: eine Schrägansicht eines erfindungsgemässen Schrittgetriebes, das teilweise aufgeschnitten dargestellt ist,

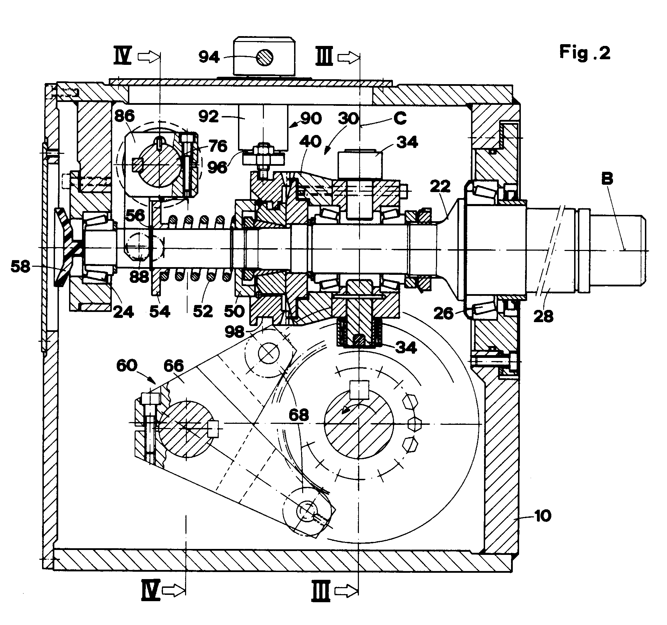

- Fig. 2: den Schnitt II-II in Fig. 1,

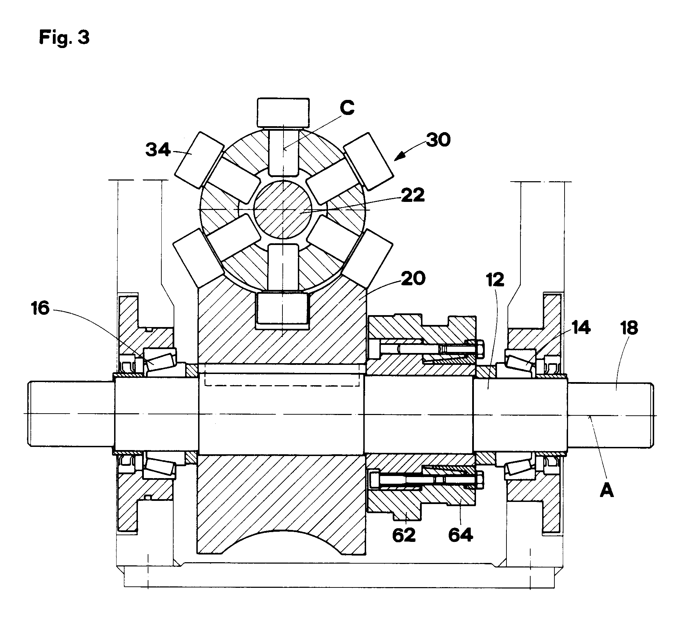

- Fig. 3: den Schnitt III-III in Fig. 2,

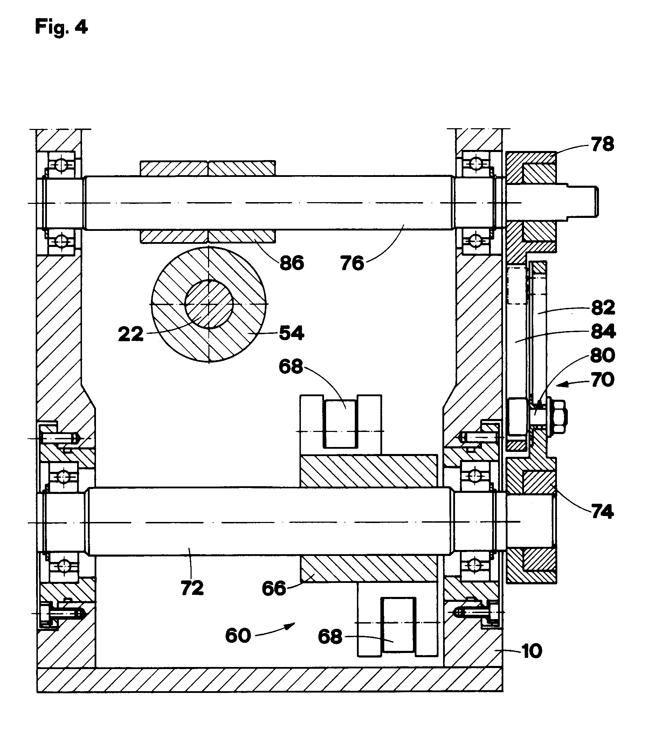

- Fig. 4: den Schnitt IV-IV in Fig. 2,
- Fig. 5: Einzelheiten aus Fig. 2 in Betriebsstellung und
- Fig. 6: Einzelheiten aus Fig. 2 in Ausrückstellung.

Das dargestellte Schrittgetriebe hat ein Getriebegehäuse 10, in dem eine treibende Welle 12 in zwei Lagern 14 und 16 gelagert ist. Innerhalb des Getriebegehäuses 10 ist auf der treibenden Welle 12 ein erster Drehkörper 20 befestigt. Die treibende Welle 12 hat einen Wellenzapfen 18, der aus dem Getriebegehäuse 10 herausragt und in üblicher Weise mit einem Motor kuppelbar ist, der die treibende Welle kontinuierlich antreibt.

Mit Abstand oberhalb der treibenden Welle 12 und im rechten Winkel zu dieser ist im Getriebegehäuse 10 eine getriebene Welle 22 in zwei Lagern 24 und 26 gelagert. Die getriebene Welle 22 hat einen aus dem Getriebegehäuse 10 herausragenden Wellenzapfen 28, der sich mit einer nachgeschalteten Vorrichtung beliebiger Art verbinden lässt. Innerhalb des Getriebegehäuses 10 ist auf der getriebenen Welle 22 ein zweiter Drehkörper 30 gelagert.

Der erste Drehkörper 20 ist eine Walze aus gehärtetem Stahl mit einer wendelförmigen Rippe 32, die sich über etwas mehr als eine volle Umdrehung, beispielsweise über einen Winkelbereich von 400°, erstreckt und Bereiche mit unterschiedlichen Steigungen aufweist. Die geometrische Achse A der treibenden Welle 12 stimmt mit derjenigen des ersten Drehkörpers 20 überein.

Der zweite Drehkörper 30 hat in gleichmässigen Winkelabständen rings um die geometrische Achse B der getriebenen Welle 22 angeordnete Rollen 34, die um je eine radiale Achse C drehbar sind. Die wendelförmige Rippe 32 erstreckt sich in jeder Betriebsphase des Getriebes spielfrei zwischen zwei benachbarten Rollen 34 hindurch und berührt zeitweise eine dritte dieser Rollen.

Der zweite Drehkörper 30 ist zwar als solcher drehbar auf der getriebenen Welle 22 gelagert, ist aber im Betrieb mit ihr gekuppelt. Zu diesem Zweck ist am zweiten Drehkörper 30 ein rohrförmiges äusseres Kupplungsteil 36 befestigt, an dem eine ringförmige Planverzahnung 37 ausgebildet ist, während an der der getriebenen Welle 22 ein nabenartiges inneras Kupplungsteil 38 befestigt ist, an dem eine ringförmige Planverzahnung 39 ausgebildet ist. Die beiden Kupplungsteile 36 und 38 gehören zu einer schaltbaren Kupplung 40 nach Zeichnung Nr. 10.3.00 der Chs. Richiger AG, Steffisburg/ Schweiz. Die Kupplung 40 hat eine Schiebemuffe 42, die eine mit beiden Planverzahnungen 37 und 39 gleichzeitig in Eingriff bringbare Planverzahnung aufweist.

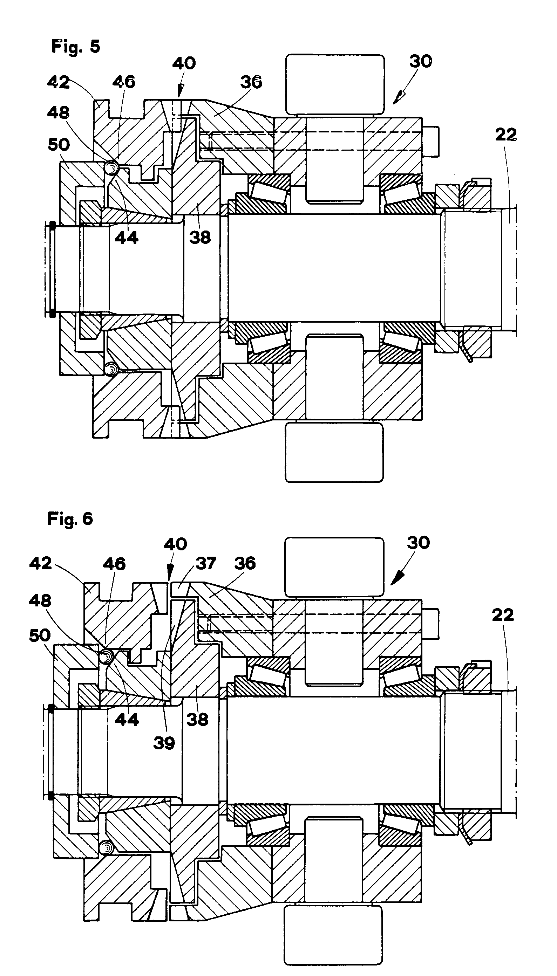

Die Kupplung 40 ist in Fig. 5 eingerückt und in Fig. 6 ausgerückt dargestellt. Im eingerückten Zustand können Drehmomente vom inneren Kupplungsteil 38 über die Schiebemuffe 42 auf das äussere Kupplungsteil 36, und ebenso in umgekehrter Richtung, übertragen werden.

Die Planverzahnungen 37, 39 sind von einer auch unter der Bezeichnung Hirthverzahnung bekannten Art und haben derart schräge Flanken, dass sie in Richtung der Achse B eine Ausrückkraft erzeugen, die der Drehmomentbelastung der Schaltkupplung direkt proportional ist. Der Ausrückkraft wirkt eine Haltekraft entgegen.

Am Kupplungsteil 38 und an der Schiebemuffe 42 sind einander in radialer Richtung paarweise gegenüberstehende Nocken 44 bzw. 46 ausgebildet, an denen Kugeln 48 von einem ringförmigen Halteglied 50 unter dem Druck einer Feder 52 anliegend gehalten sind. Die Feder 52 ist zwischen dem Halteglied 50 und einer Ringscheibe 54 angeordnet und wie diese auf der getriebenen Welle 22 axial verschiebbar.

Die Verschiebbarkeit der Ringscheibe 54 von der Kupplung 40 weg ist durch einen Sicherungsring 56 auf der getriebenen Welle 22 derart begrenzt, dass die Feder 52 unter einer Vorspannung gehalten ist, wenn die Ringscheibe 54 am Sicherungsring 56 anliegt.

Diese Vorspannung bestimmt die kleinstmögliche Grösse der genannten Haltekraft.

An der getriebenen Welle 22 ist, ausserhalb ihres Lagers 24, ein Handrad 58 befestigt, mit dem sie sich bei ausgerückter Kupplung 40 derart drehen lässt, dass sie beim Einrücken der Kupplung eine vorgegebene Winkelstellung in bezug auf den zweiten Drehkörper 30 einnimmt. Diese Winkelstellung ist an Skalenstricken erkennbar, die beispielsweise durch ein Schauglas in einer Wand des Getriebegehäuses 10 sichtbar sind.

Die Haltekraft lässt sich über den durch die Vorspannung der Feder 52 festgelegten Mindestbetrag hinaus vergrössern, indem die Ringscheibe 54 in Richtung der Achse B zum zweiten Drehkörper 30 hin verstellt wird. Diesem Zweck dient eine Steuervorrichtung 60, die von der treibenden Welle 12 abhängig ist.

Zur Steuervorrichtung 60 gehören zwei Kurvenscheiben, die im folgenden einfach als Kurven 62 und 64 bezeichnet werden. Diese Kurven 62 und 64 sind dreheinstellbar an der treibenden Welle 12 befestigt und arbeiten mit einem gemeinsamen Kurvenfolgeglied 66 zusammen.

Dieser hat die Form eines Winkelhebels mit zwei Rollen 68, die sich spielfrei an je einer der Kurven 62 und 64 abwälzen.

Alle von den Kurven 62 und 64 hervorgerufenen Bewegungen des Kurvenfolgegliedes 66 werden von einem Wegumsetzer 70 mit einstellbarem Übersetzungsverhältnis in Bewegungen der Ringscheibe 54, und somit in entsprechende Änderungen der Haltekraft übersetzt.

Zum Wegumsetzer 70 gehört eine Welle 72, die in Getriebegehäuse 10 parallel zur Achse A gelagert ist und das Kurvenfolgeglied 66 sowie einen ausserhalb des Getriebegehäuses angeordneten unteren Hebel 74 trägt, sowie eine weiter oben ebenfalls parallel zur Achse A gelagerte Welle 76, an der, ebenfalls ausserhalb des Getriebegehäuses 10, ein oberer Hebel 78 befestigt ist. Die beiden Hebel 74 und 78 sind miteinander durch ein Gelenk 80 in Gestalt eines Bolzens verbunden, der in einem Langloch 82 des Hebels 74 festgeklemmt ist und in ein Langloch 84 des Hebels 78 eingreift.

Durch Verstellen des Gelenks 80 in den Langlöchern 82 und 04 lässt sich das übersetzungsverhältnis des Wegumsetzers 70 verändern, beispielsweise im Bereich 1:3 bis 3:1. An der oberen Welle 76 ist innerhalb des Getriebegehäuses 10 ein gabelförmiges Stellglied 86 befestigt, das mit einem Paar an ihm gelagerter Rollen 88 gegen die Ringscheiben 54 drückt.

Die Haltekraft, die bestrebt ist, die Kupplung 40 eingerückt zu halten, lässt sich somit synchron mit der Drehbewegung der treibenden Welle 12 verändern und kann während jeder vollen Umdrehung dieser Welle ein oder mehrere relative Maxima und eine entsprechende Anzahl relative Minima haben, von denen keines kleiner ist als die Vorspannung der Feder 52, die durch Anlage der Ringscheibe 54 am Sicherungsring 56 festgelegt ist.

Wenn die Kupplung 40 mit einem Drehmoment belastet wird, bei dem die an den Planverzahnungen 37, 39 und 43 entstehende Ausrückkraft die gleichzeitig zur Verfügung stehende Haltekraft erreicht, dann verdrehen sich die Kupplungsteile 36 und 38 geringfügig in bezug zueinander und in bezug zur Schiebemuffe 42. Die Kugeln 48, die bisher gemäss Fig. 5 zwischen dem Halteglied 50 einerseits und je einem Paar Nocken 44 und 46 andererseits gehalten waren, finden nun infolge der Relativdrehung des Kupplungsteils 38 in bezug auf die Schiebemuffe 42 zwischen den Nocken 44 des Kupplungsteils 38 Platz, so dass sie radial nach innen wandern und die Nocken 46 der Schiebemuffe 42 freigeben.

Die Haltekraft wirkt nun über das ringförmige Halteglied 50 und die Kugeln 48 nur noch auf die Nocken 44 des Kupplungsteils 36. Infolgedessen verschiebt sich die Schiebemuffe, 42, von der Haltekraft unbehindert, in Richtung der Ausrückkraft, so dass ihre Planverzahnung 43 aus der Planverzahnung 37 des Kupplungsteils 36 ausrückt.

Dadurch wird der Kraftübertragungsweg unterbrochen, so dass die getriebene Welle 22 frei drehbar ist.

Für den Fall, dass die Kupplung 40 willkürlich ausgerückt werden soll, ist eine von Hand betätigbare Ausrückvorrichtung 90 vorgesehen. Dazu gehört eine im Getriebegehäuse 10 gelagerte senkrechte Welle 92, an der aussen ein Handhebel 94 und innen ein Exzenterzapfen 96 angeordnet ist. Der Exzenterzapfen 96 greift in eine Ringnut 98 in der Schiebemuffe 42.

## Patentansprüche (Patentansprüche für folgende(n) Vertragsstaat(en): ES)

1. Schrittgetriebe mit
- einem ersten Drehkörper (20), der von einer treibenden Welle (12) antreibbar ist,
- einem zweiten Drehkörper (30), von dem eine getriebene Welle (22) antreibbar ist, und
- einer Eingriffsbeziehung zwischen den beiden Drehkörpern (20, 30), durch welche eine kontinuierliche Drehung des ersten Drehkörper (20) in eine intermittierende Drehung des zweiten Drehkörpers (30) umsetzbar ist,
dadurch **gekennzeichnet,** dass
- einer der beiden Drehkörper (20; 30) mit der zugehörigen Welle (12; 22) durch eine Kupplung (40) verbunden ist,
- der Kupplung (40) ein Halteglied (50) zugeordnet ist, das auf sie eine im Einrücksinne wirkende Haltekraft ausübt, und
- einer der Wellen (12; 22) eine Steuervorrichtung (60) zugeordnet ist, die abhängig von der Drehwinkelstellung dieser Welle die Haltekraft steuert.

2. Schrittgetriebe nach Anspruch 1,
dadurch **gekennzeichnet,** dass die Steuer-Vorrichtung (60) mindestens eine Kurve (62) aufweist, die mit einer der beiden Wellen (12; 22) umläuft und über ein Kurvenfolgeglied (66) auf eine Feder (52) einwirkt, die das Halteglied (50) belastet.

3. Schrittgetriebe nach Anspruch 2,
dadurch **gekennzeichnet,** dass zwischen dem Kurvenfolgeglied (66) und dem Halteglied (50) ein Wegumsetzer (70) mit einstellbarem übersetzungsverhältnis angeordnet ist.

4. Schrittgetriebe nach Anspruch 3,
dadurch **gekennzeichnet,** dass der Wegumsetzer (70) zwei Hebel (74, 78) aufweist, die durch ein längs der beiden Hebel einstellbares Gelenk (80) miteinander verbunden sind.

5. Schrittgetriebe nach einem der Ansprüche 1 bis 4, dadurch **gekennzeichnet,** dass die Steuervorrichtung (60) der treibenden Welle (12) zugeordnet ist.

6. Schrittgetriebe nach einem der Ansprüche 1 bis 5, dadurch **gekennzeichnet,** dass die Kupplung (40) zwischen dem zweiten Drehkörper (30) und der getriebenen Welle (22) angeordnet ist.

7. Schrittgetriebe nach einem der Ansprüche 1 bis 6, dadurch **gekennzeichnet,** dass die Kupplung (40) innerhalb eines Getriebegehäuses (10) in einem Zwischenraum zwischen zwei Lagern (24, 26) der getriebenen Welle (22) angeordnet ist.

8. Schrittgetriebe nach einem der Ansprüche 1 bis 7, dadurch **gekennzeichnet,** dass die Kupplung (40) eine Schaltkupplung ist, die eine vom Drehmoment an der betreffenden Welle (12; 22) abhängige Ausdrückkraft erzeugt und bei überschreitung eines durch die Haltekraft bestimmten Drehmoments vollständig ausrückt.

9. Schrittgetriebe nach einem der Ansprüche 1 bis 8, dadurch **gekennzeichnet,** dass der Kupplung (40) zusätzlich eine von Hand betätigbare Ausrückvorrichtung (90) zugeordnet ist.

## Patentansprüche (Patentansprüche für folgende(n) Vertragsstaat(en): CH, DE, FR, GB, IT, NL, SE)

1. Schrittgetriebe mit
- einem ersten Drehkörper (20), der von einer treibenden Welle (12) antreibbar ist,
- einem zweiten Drehkörper (30), von dem eine getriebene Welle (22) antreibbar ist, und
- einer Eingriffsbeziehung zwischen den beiden Drehkörpern (20, 30), durch welche eine kontinuierliche Drehung des ersten Drehkörpers (20) in eine intermittierende Drehung des zweiten Drehkörpers (30) umsetzbar ist,
dadurch **gekennzeichnet,** dass
- einer der beiden Drehkörper (20, 30) mit der zugehörigen Welle (12, 22) durch eine Kupplung (40) verbunden ist,
- der Kupplung (40) ein Halteglied (50) zugeordnet ist, das auf sie eine im Einrücksinne wirkende Haltekraft ausübt,
- einer der Wellen (12, 22) eine Steuervorrichtung (60) zugeordnet ist, die abhängig von der Drehwinkelstellung dieser Welle die Haltekraft steuert, und
- zwischen der Steuervorrichtung (60) und dem Halteglied (50) ein Wegumsetzer (70) mit einstellbarem Uebersetzungsverhältnis angeordnet ist.

2. Schrittgetriebe nach Anspruch 1, dadurch gekennzeichnet, dass der Wegumsetzer (70) zwei Hebel (74, 78) aufweist, die durch ein längs der beiden Hebel einstellbares Gelenk (80) miteinander verbunden sind.

3. Schrittgetriebe nach Anspruch 1, dadurch gekennzeichnet, dass der Kupplung (40) zusätzlich eine von Hand betätigbare Ausrückvorrichtung (90) zugeordnet ist.

## Claims (Claims for the following Contracting State(s): ES)

1. Stepping drive having
- a first rotary member (20) which can be driven by a driving shaft (12),
- a second rotary member (30) whereby a driven shaft (22) can be driven, and
- an engagement relationship between the two rotary members (20, 30) whereby a continuous rotation of the first rotary member (20) can be converted into an intermittent rotation of the second rotary member (30),
characterised in that
- one of the two rotary members (20; 30) is connected to the associated shaft (12; 22) by a clutch (40),
- associated with the clutch (40) is a retaining member (50) which exerts thereon a retaining force acting in the engagement sense, and
- associated with one of the shafts (12; 22) is a control device (60) which controls the retaining force depending on the angular position of said shaft.

2. Stepping drive according to claim 1,
characterised in that the control device (60) comprises at least one cam (62) which rotates with one of the two shafts (12; 22) and acts, via a cam follower member (66), on a spring (52) which loads the retaining member (50).

3. Stepping drive according to claim 2,
characterised in that a displacement converter (70) with an adjustable transmission ratio is disposed between the cam follower member (66) and the retaining member (50).

4. Stepping drive according to claim 3,
characterised in that the displacement converter (70) comprises two levers (74, 78) which are connected to one another by a joint (80) which is adjustable along the two levers.

5. Stepping drive according to any one of claims 1 to 4,
characterised in that the control device (60) is associated with the driving shaft (12).

6. Stepping drive according to any one of claims 1 to 5,
characterised in that the clutch (40) is disposed between the second rotary member (30) and the driven shaft (22).

7. Stepping drive according to any one of claims 1 to 6,
characterised in that the clutch (40) is disposed inside a drive casing (10) in a gap between two bearings (24, 26) of the driven shaft (22).

8. Stepping drive according to any one of claims 1 to 7,
characterised in that the clutch (40) is a shifting or trip clutch which generates a disengaging force depending on the torque on the shaft in question (12; 22) and disengages completely when a torque determined by the retaining force is exceeded.

9. Stepping drive according to any one of claims 1 to 8,
characterised in that a disengaging device (90) which can be actuated by hand is additionally associated with the clutch (40).

## Claims (Claims for the following Contracting State(s): CH, LI, DE, FR, GB, IT, NL, SE)

1. Stepping drive having
- a first rotary member (20) which can be driven by a driving shaft (12),
- a second rotary member (30) whereby a driven shaft (22) can be driven, and
- an engagement relationship between the two rotary members (20, 30) whereby a continuous rotation of the first rotary member (20) can be converted into an intermittent rotation of the second rotary member (30),
characterised in that
- one of the two rotary members (20; 30) is connected to the associated shaft (12; 22) by a clutch (40),
- associated with the clutch (40) is a retaining member (50) which exerts thereon a retaining force acting in the engagement sense,
- associated with one of the shafts (12; 22) is a control device (60) which controls the retaining force depending on the angular position of rotation of said shaft, and
- a displacement converter (70) with an adjustable transmission ratio is disposed between the control device (60) and the retaining member (50).

2. Stepping drive according to claim 1,
characterised in that the displacement converter (70) comprises two levers (74, 78) which are connected to one another by a joint (80) which is adjustable along the two levers.

3. Stepping drive according to claim 1,
characterised in that a disengaging device (90) which can be actuated by hand is additionally associated with the clutch (40).

## Revendications (Revendications pour l'(les) Etat(s) contractant(s) suivant(s): ES)

1. Transmission pas-à-pas comprenant :
- un premier corps tournant (20) qui peut être entrainé par un arbre moteur (12) :
- un second corps tournant (30) par lequel un arbre récepteur (22) peut être entrainé ; et
- une liaison d'accouplement entre les deux corps tournants, sous l'action de laquelle une rotation continue du premier corps tournant (20) peut être transformée en une rotation intermittente du second corps tournant (30), caractérisée en ce que
- l'un des deux corps tournants (20 ; 30) est relié à l'arbre correspondant (12 : 22) par un embrayage (40),
- à l'embrayage (40) est associé un organe de maintien (50) qui exerce une force de maintien agissant sur cet embrayage dans le sens de la manoeuvre d'embrayage ; et
- à l'un des arbres (12 : 22) est associé un dispositif de commande (60) qui commande la force de maintien en fonction de la position angulaire de cet arbre.

2. Transmission pas-à-pas selon la revendication 1, caractérisée en ce que le dispositif de commande (60) comprend au moins une came (62) qui tourne avec l'un des deux arbres (12 : 22), et agit, par l'intermédiaire d'un organe suiveur de came (66), sur un ressort (52) qui sollicite l'organe de maintien (50).

3. Transmission pas-à-pas selon la revendication 2, caractérisée en ce qu'un transformateur de course (70) à rapport de transmission réglable est intercalé entre l'organe suiveur de came (66) et l'organe de maintien (50).

4. Transmission pas-à-pas selon la revendication 3, caractérisée en ce que le convertisseur de course (70) comprend deux leviers (74, 78) qui sont reliés l'un à l'autre par une articulation (80) réglable en position le long des deux leviers.

5. Transmission pas-à-pas selon une des revendications 1 à 4, caractérisée en ce que le dispositif de commande (60) est associé à l'arbre moteur (12).

6. Transmission pas-à-pas selon une des revendications 1 à 5, caractérisée en ce que l'embrayage (40) est interposé entre le second corps tournant (30) et l'arbre récepteur (22).

7. Transmission pas-à-pas selon une des revendications 1 à 6, caractérisée en ce que l'embrayage (40) est monté à l'intérieur d'un carter (10) de mécanisme, dans un espace intermédiaire entre deux paliers (24, 26) de l'arbre récepteur (22).

8. Transmission pas-à-pas selon une des revendications 1 à 7, caractérisée en ce que l'embrayage (40) est un embrayage débrayable qui engendre une force de débrayage fonction du couple qui s'exerce sur l'arbre correspondant, et qui débraye entièrement lorsque le couple devient supérieur à un couple qui est fixé par la force de maintien.

9. Transmission pas-à-pas selon une des revendications 1 à 8, caractérisée en ce qu'a l'embrayage (40) est combiné en outre un dispositif de débrayage (90) pouvant être manoeuvré a la main.

## Revendications (Revendications pour l'(les) Etat(s) contractant(s) suivant(s): CH, LI, DE, FR, GB, IT, NL, SE)

1. Transmission pas-à-pas comprenant :
- un premier corps tournant (20) qui peut être entrainé par un arbre moteur (12) ;
- un second corps tournant (30) par lequel un arbre récepteur (22) peut être entrainé ; et
- une liaison d'accouplement entre les deux corps tournants, sous l'action de laquelle une rotation continue du premier corps tournant (20) peut être transformée en une rotation intermittente du second corps tournant (30), caractérisée en ce que
- l'un des deux corps tournants (20 : 30) est relié à l'arbre correspondant (12 : 22) par un embrayage (40).
- à l'embrayage (40) est associé un organe de maintien (50) qui exerce sur cet embrayage une force de maintien agissant dans le sens de la manoeuvre d'embrayage ; et
- à l'un des arbres (12 ; 22) est associé un dispositif de commande (60) qui commande la force de maintien en fonction de la position angulaire de cet arbre, et
- un convertisseur de course (70) à rapport de transmission réglable est intercalé entre le dispositif de commande (60) et l'organe de maintien (50).

2. Transmission pas-à-pas selon la revendication 1, caractérisée en ce que le convertisseur de course (70) comprend deux leviers (74, 78) qui sont reliés l'un à l'autre par une articulation (80) réglable en position le long des deux leviers.

3. Transmission pas-à-pas selon la revendication 1, caractérisée en ce qu'à l'embrayage (40) est combiné en outre un dispositif de débrayage (90) pouvant être manoeuvré à la main.
